# FASCICULE DE BREVET EUROPEEN

(11) **EP 2 902 646 B1**
(45) Date de publication et mention de la délivrance du brevet: **09.11.2016**
(21) Numéro de dépôt: 15153039.1
(22) Date de dépôt: 29.01.2015
(51) Int. Cl.: F16C 11/06

(54) **Utilisation d une coupelle d obturation de rotule comme organe de rattrapage de jeu**
Verwendung einer Schale zur Abdichtung eines Kugelgelenks als Spielnachstellungsorgan
Use of a ball sealing cup as a slack adjustment member

(30) Priorité: 29.01.2014 FR 1450691
(43) Date de publication de la demande: 05.08.2015
(73) Titulaire: Jtekt Europe, 69540 Irigny (FR)
(72) Inventeur: Chapel, Vivien, 69005 Lyon (FR)
(74) Mandataire: Chevalier, Renaud Philippe

(56) Documents cités:
- DE-A1- 2 162 597
- DE-A1-102006 013 046
- DE-C1- 19 638 466
- FR-A1- 2 503 291
- FR-A5- 2 075 134
- US-A- 3 350 121
- US-A- 3 667 789
- US-A- 4 163 617

## Description

La présente invention concerne le domaine général des mécanismes à articulation sphérique, de type rotules.

La présente invention se rapporte plus particulièrement aux rotules qui sont utilisées dans les dispositifs de direction ou de suspension de véhicules, et notamment dans les dispositifs de direction assistée, par exemple pour assurer la jonction entre d'une part une crémaillère de direction, entraînée par un volant de conduite, et d'autre part une biellette de direction qui est reliée à un porte-fusée sur lequel est monté une roue directrice du véhicule, de manière à pouvoir convertir le déplacement de ladite crémaillère en une modification de l'angle de braquage de ladite roue directrice.

Une rotule comprend généralement d'une part un organe d'articulation mâle, dit « pivot », qui comprend une tige portant une sphère d'articulation, et d'autre part un organe d'articulation femelle, qui comprend un boîtier dans lequel est placée une cage, ladite cage formant un palier sphérique dans lequel s'articule la sphère d'articulation.

Avec le temps, les organes d'articulation subissent une certaine usure, et/ou certaines déformations par fluage, ce qui peut conduire à l'apparition de jeux.

Or, ces jeux peuvent être à l'origine de bruits, en permettant aux organes d'articulation de s'entrechoquer, mais également à l'origine d'une certaine imprécision dans le guidage relatif desdits organes d'articulation, ce qui peut nuire à la qualité, à la précision, et à la fiabilité de fonctionnement de la rotule.

En particulier, l'apparition de jeux dans une rotule peut ainsi être préjudiciable au confort et à la sécurité des occupants du véhicule concerné.

Afin de compenser l'usure des organes d'articulation, il est connu de prévoir un ressort hélicoïdal de rattrapage de jeu, qui est interposé en compression entre la cage, qui reçoit le pivot de la rotule, et une culasse qui obture le boîtier à l'opposé dudit pivot, comme par exemple dans le document US-3 350 121.

Si la présence d'un tel ressort de rattrapage de jeu donne généralement satisfaction en matière de compensation des effets de l'usure, elle peut en revanche s'accompagner de certains inconvénients.

Ainsi, la présence d'un ressort de rattrapage de jeu augmente le coût de fabrication de la rotule, et tend à compliquer l'opération d'assemblage de ladite rotule, dans la mesure notamment où il peut être difficile de positionner convenablement ledit ressort au sein du boîtier, et de mettre en place la culasse par-dessus ledit ressort, tout en subissant la contrainte dudit ressort, contrainte qui augmente de surcroît au fur et à mesure que l'on accentue la déformation dudit ressort par le rapprochement de la culasse et du boîtier.

Par ailleurs, le ressort constitue, au sein de la rotule, une pièce mécanique qui est susceptible de se coincer, notamment par grippage, voire de se déformer ou de se briser, ce qui peut occasionner une défaillance précoce de la rotule.

Les objets assignés à l'invention visent par conséquent à remédier aux inconvénients susmentionnés et à proposer une nouvelle sorte de rotule qui présente un fonctionnement durablement précis et fiable, qui possède une bonne robustesse et une grande longévité, tout en étant simple et peu coûteuse à fabriquer.

Les objets assignés à l'invention sont atteints au moyen d'une rotule comportant d'une part un organe d'articulation mâle dit « pivot », qui comprend une tige portant une sphère d'articulation, et d'autre part un organe d'articulation femelle, qui comprend un boîtier délimitant un logement de réception qui s'étend, selon un axe directeur (XX'), depuis une ouverture d'accès à travers laquelle le pivot pénètre dans le boîtier, jusqu'à une culasse, qui obture ledit logement de réception sensiblement à l'opposé de ladite ouverture d'accès, ledit logement de réception contenant une cage, qui forme un palier sphérique dans lequel s'articule la sphère d'articulation, ainsi qu'un organe de rattrapage de jeu, qui est soutenu par la culasse et qui est précontraint, par déformation élastique, à l'encontre de la cage, de sorte à pouvoir déplacer ladite cage dans le boîtier à l'encontre du pivot, afin de compenser l'apparition de jeu dans la liaison entre la sphère d'articulation et le palier sphérique, ladite rotule étant caractérisée en ce que l'organe de rattrapage de jeu est formé d'un seul tenant avec la culasse, dont ledit organe de rattrapage de jeu constitue une portion dite « portion compensatrice ».

Avantageusement, le fait d'utiliser la culasse elle-même, et plus particulièrement une portion de ladite culasse (dite « portion compensatrice ») comme organe élastique de rattrapage de jeu, c'est-à-dire, en d'autres termes, le fait d'intégrer dans la culasse l'organe de rattrapage de jeu, déformable élastiquement, de telle sorte que ledit organe de rattrapage de jeu est venu de matière avec ladite culasse, permet de simplifier la structure de la rotule, et donc de faciliter l'assemblage et de diminuer le coût de fabrication de ladite rotule, tout en conservant un rattrapage de jeu permanent et efficace, et donc tout en garantissant sur le long terme la fiabilité et la discrétion du fonctionnement de la rotule.

Avantageusement, l'invention permet d'utiliser une seule et même pièce (la culasse) pour réaliser simultanément d'une part une fonction d'obturation étanche du boîtier, afin typiquement de protéger l'articulation des projections d'eau, de la poussière, ou du brouillard salin, et d'autre part une fonction de rattrapage de jeu par effet ressort.

A ce titre, l'utilisation d'une seule et même pièce, en l'espèce la culasse, à même de réaliser les différentes fonctions susmentionnées, permet notamment de simplifier la manipulation, la mise en place, l'alignement et le centrage reproductible de ladite culasse (et de son organe de rattrapage de jeu intégré) sur le boîtier, ce qui facilite l'assemblage de la rotule.

En outre, le regroupement de plusieurs fonctions utiles au sein d'une même culasse relativement peu encombrante, permet, le cas échéant, d'améliorer la compacité de la rotule et/ou de réduire le poids de ladite rotule.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective éclatée, l'assemblage d'une variante de rotule conforme à l'invention.

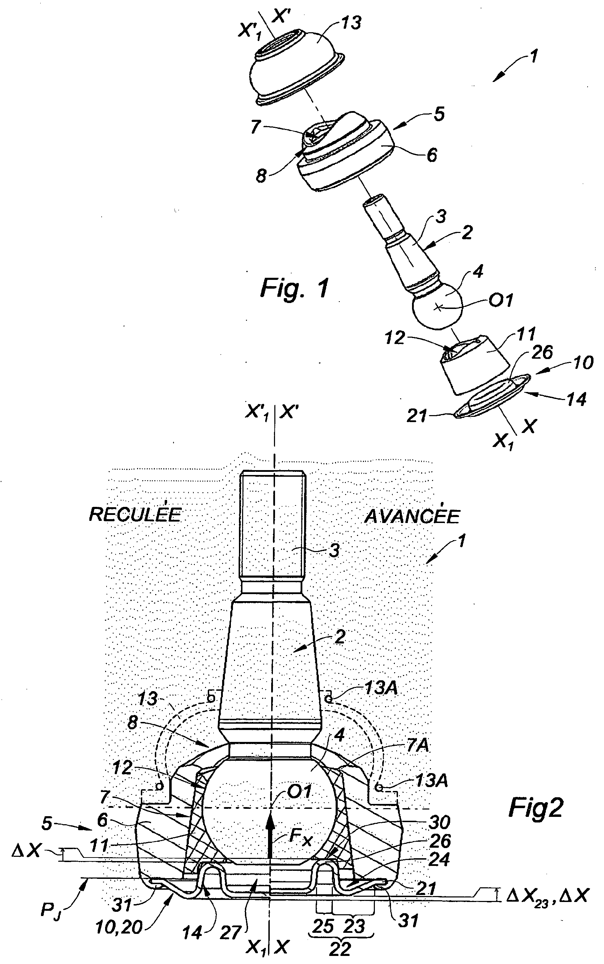

La figure 2 illustre, selon une vue en coupe longitudinale selon l'axe directeur (XX'), la rotule de la figure 1 assemblée, ainsi que le principe de fonctionnement du rattrapage de jeu procuré par la culasse conforme à l'invention, le demi-plan gauche représentant ladite rotule, et plus particulièrement la culasse et la cage, en configuration dite « reculée », qui correspond à la configuration adoptée lors de l'assemblage initial en usine, et le demi-plan droit représentant la même rotule en configuration dite « avancée », selon laquelle la cage a été déplacée vers le pivot par la portion compensatrice de la culasse afin de compenser l'apparition d'un jeu.
Les figures 3, 4, 5 et 6 illustrent, respectivement selon une vue en perspective, une vue en coupe, une vue de côté, et une vue de dessus, une variante de réalisation de culasse conforme à l'invention, telle qu'utilisée au sein des rotules des figures 1 et 2.
Les figures 7, 8, 9 et 10 illustrent, respectivement selon une vue en perspective, une vue en coupe, une vue de côté, et une vue de dessus, une autre variante de réalisation de culasse conforme à l'invention, à ondulations multiples.

La présente invention concerne une rotule 1.

De manière connue en soi, et tel que cela est illustré sur les figures 1 et 2, ladite rotule 1 comporte d'une part un organe d'articulation mâle 2, dit « pivot », qui comprend une tige 3 portant une sphère d'articulation 4, et d'autre part un organe d'articulation femelle 5.

Ledit organe d'articulation femelle 5 comprend un boîtier 6 qui délimite un logement de réception 7, ledit logement de réception 7 s'étendant, selon un axe directeur (XX'), depuis une ouverture d'accès 8 à travers laquelle le pivot 2 pénètre dans le boîtier 6, jusqu'à une culasse 10, qui obture ledit logement de réception 7 sensiblement à l'opposé de ladite ouverture d'accès 8.

Le logement de réception 7 contient en outre avantageusement une cage 11, qui forme un palier sphérique 12 dans lequel s'articule la sphère d'articulation 4.

A cet effet, ledit palier sphérique 12 présentera avantageusement une forme et des dimensions sensiblement conjuguées à celles de la sphère 4.

La cage 11 peut notamment être réalisée dans un matériau polymère, par exemple en POM (poly-oxy-méthylène), PEEK (poty-ether-ether-cétone), PPA (polyamide), matériau polymère qui pourra éventuellement être renforcé de fibres, par exemple de fibres de verre (notamment dans le cas du PPA).

Le pivot 2 pourra quant à lui être réalisé en métal, de type acier ou aluminium, voire en matériau polymère éventuellement renforcé de fibres.

Par simplicité de réalisation, l'articulation entre le pivot 2 et la cage 11 sera du type palier lisse, la cage 11, et plus particulièrement son palier sphérique 12, formant de préférence un coussinet lisse dans et contre lequel la sphère 4 vient directement au contact glissant.

La culasse 10 assure de préférence une obturation étanche du boîtier 6, et plus particulièrement du logement de réception 7, de sorte à empêcher la pénétration dans le boîtier 6, et plus particulièrement dans la cage 11, de projections d'eau, de brouillard salin, de poussière, ainsi que la fuite du lubrifiant qui est utilisé, le cas échéant, pour améliorer le glissement articulaire de la sphère 4 contre le (et à l'intérieur du) palier sphérique 12.

Afin de réaliser une fonction d'étanchéité similaire au niveau de l'ouverture d'accès 8, la rotule 1 comprendra de préférence un soufflet 13 de protection, flexible, par exemple en matériau élastomère de type caoutchouc, qui relie le boîtier 6 à la tige 3 du pivot, tel que cela est visible sur la figure 2.

Le soufflet de protection 13 pourra à cet effet prendre la forme d'une cloche, qui est sensiblement générée par révolution autour de l'axe directeur (XX'), et qui vient coiffer le boîtier 6, et plus particulièrement couvrir l'ouverture d'accès 8, en étant traversé par la tige 3.

Le soufflet de protection 13 pourra être maintenu d'une part serré contre le boîtier 6, par sa base (la base large de la cloche), et d'autre part serré contre la tige 3, par son sommet (le sommet de la cloche, traversé par la tige 3).

Le maintien du soufflet de protection 13 pourra être réalisé par tout organe de fixation apte à assurer un serrage centripète dudit soufflet de protection 13 à l'encontre du boîtier 6, respectivement à l'encontre de la tige 3, et par exemple, tel que cela est illustré sur la figure 2, par des anneaux élastiques 13a, préférentiellement métalliques, qui pourront être soit rapportés à l'extérieur du soufflet de protection 13 soit noyés dans le matériau élastomère constitutif dudit soufflet.

On notera O1 le centre de la rotule 1, c'est-à-dire le centre commun de la sphère 4 et du palier sphérique 12 de la cage 11, autour duquel s'effectuent les mouvements en rotation du pivot 2 par rapport à la cage 11 (et au boîtier 6).

De préférence, la rotule 1 possède au moins deux, et de préférence trois, degrés de liberté en rotation autour du centre O1.

De préférence, l'axe directeur (XX') du boîtier 6 passe par ledit centre O1, tel que cela est représenté sur les figures 1 et 2.

On notera également que, par simple commodité de description, le pivot 2 est ici représenté aligné selon ce même axe directeur (XX').

Par conventitin et par commodité de description, on désignera par « axiale » une direction ou une dimension considérée selon l'axe directeur (XX'), ou parallèlement à celui-ci, et par « radiale » une direction ou une dimension sécante, et de préférence sensiblement perpendiculaire, audit axe directeur (XX').

De préférence, la rotule 1 sera conçue pour pouvoir être utilisée dans un dispositif de direction ou un dispositif de suspension de véhicule, par exemple de véhicule automobile, destiné au transport de personnes ou de marchandises.

La présente invention peut ainsi de préférence concerner une rotule de direction, et plus particulièrement une rotule de direction assistée.

Une telle direction assistée (non représentée) pourra comprendre, de manière usuelle, un volant de conduite qui est monté sur une colonne de direction et qui permet de commander le déplacement en translation, au sein d'un carter de direction (solidaire du châssis du véhicule), d'une crémaillère dont les extrémités sont reliées à des biellettes de direction, gauche et droite, qui agissent à leur tour sur les roues directrices du véhicule pour en modifier l'angle de braquage.

Un moteur d'assistance, par exemple hydraulique ou électrique, permettra d'appliquer sur la crémaillère, par exemple au moyen d'un mécanisme à double pignon, ou bien encore au moyen d'un réducteur à roue tangente et vis sans fin venant en prise sur la colonne de direction, et en fonction de lois d'assistance prédéterminées, un effort d'assistance (moteur ou au contraire résistant), en complément du couple exercé par le conducteur sur le volant de conduite.

La rotule 1 conforme à l'invention pourra notamment assurer la jonction directe entre une extrémité de la crémaillère et la biellette de direction correspondante, ou bien entre une biellette de direction et le porte-fusée portant la roue directrice contrôlée par ladite biellette.

Selon une autre variante de réalisation, la rotule 1 pourra former une rotule de suspension, assurant par exemple la jonction entre un porte-fusée, porteur d'une roue (directrice ou non) du véhicule, et un bras de suspension ou un triangle de suspension, lui-même monté pivotant sur le châssis dudit véhicule.

Quelle que soit du reste la destination de la rotule 1, le logement de réception 7 contient également avantageusement un organe de rattrapage de jeu 14, qui est soutenu par la culasse 10 et qui est précontraint, par déformation élastique, à l'encontre de la cage 11, de sorte à pouvoir déplacer ladite cage 11 dans le boîtier 6 à l'encontre du pivot 2, afin de compenser l'apparition de jeu dans la liaison entre la sphère d'articulation 4 et le palier sphérique 12.

Tel que cela est illustré sur la figure 2, la déformation élastique de l'organe de rattrapage de jeu 14 permet d'exercer sur la cage 11 un effort de rappel, noté ici Fₓ, qui tend à plaquer en permanence la paroi interne de la cage 11, qui délimite le palier sphérique 12, contre la paroi externe de la sphère 4, afin de maintenir entre le pivot 2 et la cage 11, et plus particulièrement entre la sphère 4 et le palier sphérique 12 conjugué, un contact glissant, assurant un guidage rotatif sensiblement sans jeu.

L'organe de rattrapage de jeu 14 assurera ainsi une compensation active du jeu, et plus particulièrement des effets de l'usure sur la sphère 4 et/ou le palier sphérique 12, l'effort de rappel Fₓ étant moteur pour déplacer et/ou déformer la cage 11 en la repoussant vers l'ouverture d'accès 8, à l'encontre du pivot 2, au fil du temps et de l'usure de la rotule 1, pour maintenir le contact entre la sphère 4 et le palier sphérique 12.

De préférence, par commodité de construction, et par souci d'homogénéité de la compensation de jeu, l'organe de rattrapage de jeu 14, le boîtier 6 et la cage 11 seront agencés de sorte que l'organe de rattrapage de jeu 14 puisse déplacer ladite cage 11 dans ledit boîtier 6 sensiblement selon l'axe directeur (XX'), et plus particulièrement sensiblement en translation selon ledit axe directeur (XX').

De même, par commodité de construction, et par souci d'homogénéité de la compensation de jeu, l'effort de rappel Fₓ exercé par l'organe de rattrapage de jeu 14 sur la cage 11 sera de préférence majoritairement, voire exclusivement, porté par l'axe directeur (XX').

Selon un agencement préférentiel, le logement de réception 7 présente une forme sensiblement tronconique qui va en rétrécissant depuis la culasse 10 vers l'ouverture d'accès 8, tel que cela est notamment visible sur la figure 2.

Avantageusement, la paroi radialement externe de la cage 11 pourra dans ce cas présenter une forme tronconique sensiblement conjuguée (à celle du logement de réception 7), de sorte que le déplacement de ladite cage 11 vers le pivot 2 sous l'action de l'organe de rattrapage de jeu 14 tende à provoquer un resserrement radial du palier sphérique 12 à l'encontre de la sphère d'articulation 4.

En d'autres termes, un emboîtement de type « cône sur cône » de la cage 11 dans le boîtier 6 permet avantageusement de convertir le déplacement translatif axial de la cage 11 le long de l'axe directeur (XX') en un resserrement radial du palier sphérique 12 sur lui-même.

La cage 11 pourra ainsi agir comme un mors de type constrictif sur la sphère d'articulation 4, sous la contrainte de l'organe de rattrapage de jeu 14 qui tend à refermer ledit mors sur ladite sphère 4.

Avantageusement, un tel agencement selon l'invention assurera, le cas échéant au moyen d'un organe de rattrapage de jeu 14 unique et simple, un rattrapage de jeu multidirectionnel, particulièrement homogène et équilibré.

Bien entendu, la cage 11, le logement de réception 7 et l'organe de rattrapage de jeu 14 pourront présenter toute forme géométrique appropriée, à même de procurer une compensation progressive du jeu.

En particulier, la cage 11 pourra présenter un ou plusieurs évidements ou rainures, orienté(e)s sensiblement axialement, c'est-à-dire orientés ici sensiblement selon les méridiens du palier sphérique 12.

Lesdits évidements ou rainures aminciront voire traverseront localement la paroi du palier sphérique 12 afin d'affaiblir localement la cage 11 pour améliorer la souplesse de ladite cage 11, et donc du palier sphérique 12, et plus particulièrement pour améliorer la capacité de contraction (ou, au besoin, d'expansion) radiale élastique de ladite cage 11, et donc dudit palier sphérique 12.

Selon une variante possible de réalisation, la cage 11 peut ainsi se présenter sous la forme d'une corolle, de type mandrin, qui est subdivisée, par des fentes méridiennes qui débouchent au sommet de la cage 11 (du côté de la tige 3, à l'opposé de la culasse 10), en une pluralité de "pétales" flexibles, reliés par une base commune (la base large de la cage 11, située près de la culasse 10), de telle sorte que lesdits pétales, qui forment les éléments de paroi du palier sphérique 12, peuvent se comporter comme des mors élastiques à l'encontre de la sphère d'articulation 4.

On notera que le logement de réception 7, la cage 11 et/ou la culasse 10 présenteront de préférence sensiblement une forme de révolution autour de l'axe directeur (XX').

Par ailleurs, le logement de réception 7 présentera de préférence un resserrement 7A, du genre rebord ou épaulement, situé par exemple au col de l'ouverture d'accès 8, ledit resserrement 7 formant une butée axiale à l'encontre de la cage 11, de manière à empêcher l'éjection de ladite cage 11 hors du boîtier 6, notamment sous la poussée de l'effort de rappel Fₓ exercé par l'organe de rattrapage de jeu 14.

Selon l'invention, l'organe de rattrapage de jeu 14 est avantageusement formé d'un seul tenant avec la culasse 10, dont ledit organe de rattrapage de jeu 14 constitue une portion dite « portion compensatrice ».

En d'autres termes, l'organe de rattrapage de jeu 14 est avantageusement venu de matière avec la culasse 10, avec laquelle il est fabriqué, et non plus formé par une pièce distincte initialement séparée de ladite culasse 10 et de la cage 11.

Avantageusement, l'intégration de l'organe de rattrapage de jeu 14 à la culasse 10, en une seule et même pièce, permet notamment de réaliser le montage de la culasse 10 et de l'organe de rattrapage de jeu 14 sur le boîtier en une seule opération, simplifiée, sans risque d'oubli ou d'erreur de positionnement dudit organe de rattrapage de jeu 14, puisque ce dernier est rapporté solidairement avec la culasse 10, au moment du montage de ladite culasse sur le boîtier 6.

L'invention permet ainsi avantageusement de créer une rotule 1 dépourvue d'organe de rattrapage de jeu 14 indépendant, c'est-à-dire qui serait distinct à la fois de la culasse 10 et de la cage 11.

De préférence, la portion compensatrice 14 de la culasse 10, c'est-à-dire l'organe de rattrapage de jeu 14 (à laquelle ladite portion compensatrice pourra être assimilée dans ce qui suit, par commodité de description), vient en outre directement en appui contre la cage 11, et plus particulièrement contre la base large de ladite cage 11, ce qui garantit la simplicité et la compacité de l'assemblage, ainsi que la fiabilité du fonctionnement du rattrapage de jeu.

De préférence, tel que cela est illustré sur les figures 1 à 10, la culasse 10 est formée par un disque ondulé 20.

L'axe central (X₁X'₁) dudit disque ondulé 20 coïncidera de préférence, une fois le disque ondulé 20 en place au sein de la rotule 1, sensiblement avec l'axe directeur (XX') du logement de réception 7, et pourra donc, par commodité de description, être assimilé audit axe directeur.

De préférence, selon l'invention, le disque ondulé 20 comporte successivement, depuis son bord radialement externe vers son axe central (X₁X'₁), une couronne périphérique de fixation 21, par laquelle ledit disque ondulé 20 est fixé au boîtier 6, puis la portion compensatrice 14, qui est comprise radialement entre la couronne périphérique de fixation 21 et l'axe central (X₁X'₁) dudit disque.

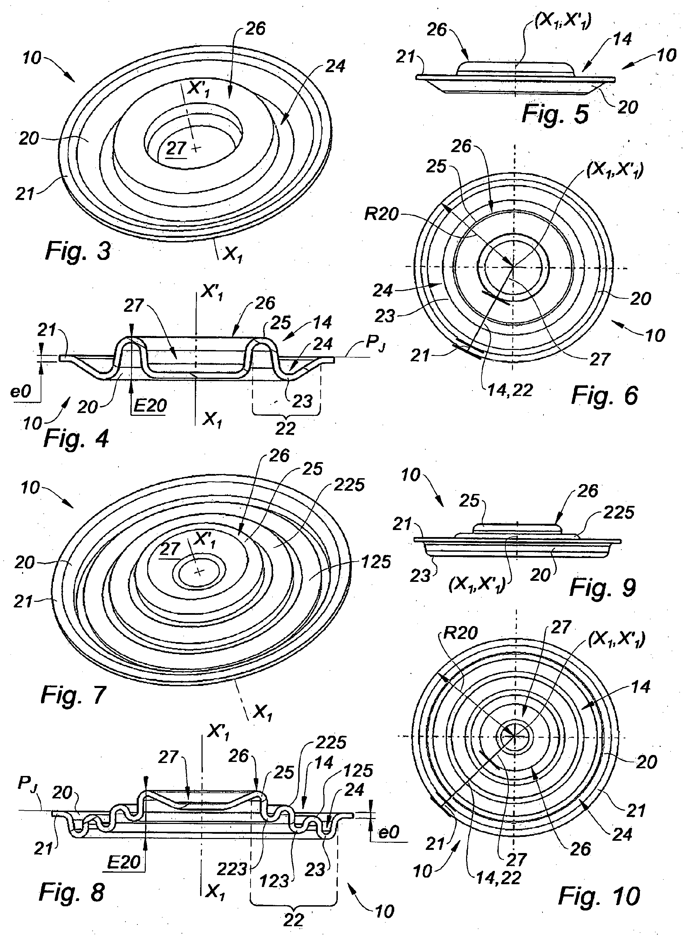

A titre indicatif, et tel que cela est illustré sur les figures 6 et 10, la portion compensatrice 14 pourra couvrir, autour de l'axe central (X₁X'₁) une plage annulaire sensiblement comprise entre une limite radialement interne (cylindre fictif) située à 20%, 25%, 30 %, voire 40 % du rayon R20 du disque ondulé 20 et une limite radialement externe (autre cylindre fictif) située à 75%, 80%, voire 90% du rayon dudit disque ondulé 20 (la plage extérieure restante correspondant à la couronne périphérique de fixation 21).

Selon l'invention, et tel que cela est notamment bien visible sur les figures 2 et 4, la portion compensatrice 14 du disque ondulé 20 comprend au moins une ondulation 22, de sorte à présenter d'une part au moins une alternance négative de dégagement 23, qui prolonge radialement la couronne périphérique de fixation 21 de façon centripète tout en étant orientée axialement à l'opposé de la cage 11 de sorte à former, autour de l'axe central (X₁X'₁) du disque, une dépression de dégagement 24 par rapport à ladite cage 11, et d'autre part, au moins une alternance positive porteuse 25, qui est comprise radialement entre l'alternance négative de dégagement 23 et l'axe central (X₁X'₁) du disque ondulé 20, en étant orientée axialement vers la cage 11, de sorte à former, autour de l'axe central (X₁X'₁), une couronne porteuse 26, qui forme axialement saillie par rapport à la dépression de dégagement 24 et qui vient en appui contre la cage 11.

Avantageusement, l'ondulation 20, et plus particulièrement les alternances 23, 25 fournissent, lorsque l'on parcourt radialement le disque ondulé 20 depuis sa périphérie vers son axe central (X₁X'₁), une succession de plis concentriques qui favorisent la déformation élastique (notamment en flexion, selon une composante axiale) de la portion compensatrice 14 et qui constituent une réserve de matière permettant d'accompagner ladite déformation sur une course axiale d'amplitude relativement importante.

L'ondulation 22, et plus particulièrement les alternances 23, 25 pourront présenter (en coupe) une forme arrondie, de préférence sensiblement sinusoïdale, ou bien toute autre forme appropriée.

On notera par ailleurs que chaque alternance 23, 25 permet de générer, autour de l'axe central (X₁X'₁), et de préférence par révolution autour dudit axe central (X₁X'₁), des reliefs concentriques, de préférence centrés sur ledit axe central (X₁X'₁), et plus particulièrement des reliefs annulaires, préférentiellement circulaires, en l'espèce une rainure annulaire axialement concave formant une dépression de dégagement 24 puis, plus près de l'axe central, un bossage annulaire axialement convexe formant une couronne porteuse 26.

Avantageusement, si l'on considère le disque ondulé 20 en coupe, sur la moitié qui s'étend depuis son axe central (X₁X'₁) et jusqu'à son bord externe, l'alternance positive porteuse 25, et plus particulièrement la couronne porteuse 26 correspondant à la ligne de crête générée autour de l'axe central par le sommet de ladite alternance positive porteuse 25, offre un point d'appui (et plus précisément une ligne d'appui circulaire) étayant la cage 11, point d'appui qui est soutenu en porte-à-faux par l'ondulation 22, dont l'extrémité radialement externe est retenue par la couronne périphérique de fixation 21 fixée au boîtier 6.

La culasse 10 forme ainsi avantageusement une butée (axiale) élastique, de type coupelle élastique, dont la portion compensatrice 14 agit élastiquement à l'encontre de la cage 11, à la manière d'un tremplin.

Avantageusement, l'alternance négative de dégagement 23, et par conséquent la dépression de dégagement 24, procure un espace libre qui évite toute interférence, notamment axiale, entre la cage 11 et la périphérie du disque ondulé 20, en évitant sensiblement tout contact entre la cage 11 et la culasse 10 dans la zone annulaire comprise radialement entre la couronne porteuse 26 et la couronne périphérique de fixation 21 ce qui autorise ainsi une grande amplitude de mouvement (ici axial) de la cage 11 et de la portion compensatrice 14.

Par ailleurs, la culasse 10, et plus particulièrement le disque ondulé 20, présentera de préférence en son centre un dégagement central 27, concave, situé (axialement) en retrait de la couronne porteuse 26, et agencé de manière à éviter toute interférence entre la culasse 10 et la sphère d'articulation 4, lors des mouvements de rotation de ladite sphère 4 au sein du palier sphérique 12.

Ledit dégagement central 27 pourra par exemple s'étendre sur une plage annulaire radialement comprise entre l'axe central (X₁X'₁) et un cylindre fictif situé entre 25% et 40% du rayon R20 du disque ondulé 20. Ledit cylindre fictif coïncidera de préférence avec la limite radialement interne de la portion compensatrice 14.

De préférence, tel que cela est notamment visible sur les figures 2, 4 et 8, la couronne périphérique de fixation 21 s'étend sensiblement dans un plan de jauge Pⱼ normal à l'axe directeur (XX').

Par convention, on pourra considérer que le plan de jauge Pⱼ correspond au plan normal à l'axe central (X₁X'₁) du disque ondulé 20, et plus particulièrement normal à l'axe directeur (XX') du boîtier 6, et qui vient au contact tangent de la couronne périphérique de fixation 21, au niveau où ladite couronne de fixation 21 émerge radialement du boîtier 6, sur la face de ladite couronne de fixation qui est la plus proche (axialement) de la cage 11.

De préférence, l'alternance négative de dégagement 23 plonge alors (axialement) sous ledit plan de jauge Pⱼ, à l'opposé de la cage 11 par rapport audit plan de jauge, tandis que l'alternance positive porteuse 25 remonte (axialement) au-dessus dudit plan de jauge Pⱼ, du côté de la cage 11.

En distribuant ainsi les alternances 23, 25 de part et d'autre du plan de jauge Pⱼ, c'est-à-dire de part et d'autre du point d'accroche de la culasse 10 au boîtier 6, on peut d'une part créer la combinaison de structures de dégagement (dépression de dégagement 24) et de structures porteuses (couronne porteuse 26) nécessaires à la suspension élastique de la cage 11 dans le boîtier 6 (par rapport audit boîtier 6), et d'autre part conserver une structure de culasse 10 particulièrement compacte, équilibrée, et peu encombrante axialement.

On notera qu'une telle structure équilibrée sera notamment à même de supporter aussi bien :
- un enfoncement (recul) axial « négatif », c'est-à-dire une déformation tendant à transférer de la matière constitutive de ladite culasse 10 sous le plan de jauge Pⱼ, et ainsi à éloigner la cage 11 de l'ouverture d'accès 8, notamment pour permettre le montage avec déformation initiale de la culasse 10 (ce qui correspond à la configuration « reculée » sur la gauche de la figure 2),
- qu'un mouvement d'avance axial « positif », tendant à l'inverse à transférer de la matière constitutive de ladite culasse 10 au-dessus du plan de jauge Pⱼ, et ainsi à rapprocher la cage 11 de l'ouverture d'accès 8, pour compenser ici l'apparition d'un jeu (ce qui correspond à la configuration « avancée » sur la droite de la figure 2).

On pourra ainsi obtenir une culasse 10 présentant un excellent compromis entre robustesse, souplesse foncfiorinelle et compacité.

De préférence, le plan de jauge Pⱼ pourra être situé sensiblement à la moitié de l'épaisseur hors-tout E20 (l'encombrement axial total) du disque ondulé 20.

Ladite épaisseur hors-tout E20 correspondra quant à elle de préférence à l'écart axial maximal entre le fond de l'alternance négative de dégagement 23 et le sommet de l'alternance positive porteuse 25, tel que cela est illustré sur les figures 4 et 8.

Selon une variante possible de réalisation, et tel que cela est illustré sur les figures 7 à 10, la portion compensatrice 14 de la culasse 10 pourra comporter une pluralité d'ondulations 22 sensiblement concentriques, de sorte à présenter radialement, entre la couronne périphérique de fixation 21 et l'axe central (X₁X'₁) du disque ondulé 20, depuis l'alternance négative de dégagement 23 jusqu'à l'alternance positive porteuse 25, une succession de paires d'alternances intermédiaires négatives 123, 223 puis positives 125, 225.

La portion compensatrice 14 pourra ainsi présenter une structure déformable multi-plis, rappelant un soufflet télescopique.

Un telle structure déformable multi-plis procure avantageusement un effet ressort amélioré, notamment en termes d'augmentation de la course utile et d'amélioration de la souplesse de la structure, car la multiplication des plis (la multiplication des ondulations 22) offre une grande réserve de matière et permet de réduire la raideur de la portion compensatrice 14 (et donc de la culasse 10).

Une telle structure déformable multi-plis permet également d'améliorer la compacité de la culasse 10, et plus particulièrement la compacité de la portion compensatrice 14, car les ondulations 22 peuvent être moins amples (axialement) que dans le cas d'une ondulation unique.

Une telle structure déformable multi-plis contribue enfin à augmenter la longévité de la culasse 10, car la déformation individuelle de chaque ondulation 22 reste relativement faible, et sollicite moins la matière qu'au sein d'une ondulation unique.

De préférence, les alternances intermédiaires 123, 125, 223, 225 seront strictement comprises, axialement, entre le fond de l'alternance négative de dégagement 23 et le sommet de l'alternance positive porteuse 25.

En outre, lesdites alternances intermédiaires 123, 125, 223, 225 seront de préférence étagées en gradins, tel que cela est illustré sur la figure 8, de telle sorte que les alternances de même signe (positives 125, 225 puis 25, respectivement négatives 23, 123, puis 223) se déportent axialement, de préférence de façon progressive (monotone), à chaque ondulation, et plus particulièrement de telle sorte que lesdites alternances se rapprochent axialement un peu plus de la cage 11 à chaque ondulation, au fur et à mesure que l'on se rapproche radialement de l'axe central (X₁X'₁) du disque ondulé (la ligne moyenne des ondulations 22 générant ainsi sensiblement, autour dudit axe central, un cône dont le sommet pointe en direction de la cage 11 et du pivot 2).

De façon préférentielle, les dimensions, et notamment le diamètre et l'amplitude des ondulations 22 seront telles que la variante à ondulations 22 multiples des figures 7 à 10 sera interchangeable, par exemple au sein de la rotule 1 de la figure 2, avec la variante à ondulation 22 unique des figures 3 à 6.

Par ailleurs, tel que cela est illustré sur la figure 2, et selon une caractéristique qui peut s'appliquer quelle que soit la variante de disque ondulé 20 considérée, la couronne porteuse 26 de la culasse 10 pénètre de préférence dans un lamage 30 de la cage 11.

Avantageusement, on peut ainsi favoriser un centrage automatique et reproductible de la culasse 10 par rapport à la cage 11, ce qui simplifie l'opération de montage et fiabilise le fonctionnement du rattrapage de jeu.

En outre, l'appui circulaire plan ainsi obtenu, avantageusement sensiblement centré sur l'axe directeur (XX'), confère à la suspension élastique de la cage 11 par la culasse 10 une grande stabilité, aussi bien statique que dynamique, quel que soit le degré d'usure de ladite rotule 1, et quelle que soit la configuration (avancée, reculée, ou intermédiaire entre reculée et avancée) dans laquelle se trouve ladite rotule 1.

De surcroît, le fait d'interposer, tant axialement que radialement, grâce à la paroi du lamage 30, une portion de la cage 11 entre la couronne porteuse 26 et la paroi interne du boîtier 6 la plus proche permet d'éviter toute interférence et tout grippage de la portion compensatrice 14 contre le boîtier 6, ce qui améliore la fiabilité et la longévité du rattrapage de jeu.

Quel que soit par ailleurs l'agencement de la rotule 1 et en particulier de l'organe de rattrapage de jeu 14 conforme à l'invention, la plage de déformation élastique de la portion compensatrice 14 de la culasse 10 est de préférence suffisante pour pouvoir, tout en maintenant la cage 11 sous une contrainte de rattrapage de jeu (effort de rappel Fₓ) non nulle, déplacer ladite cage 11 selon l'axe directeur (XX') sur une course axiale utile ΔX qui est supérieure ou égale à 0,5 mm, de préférence supérieure ou égale à 1 mm, préférentiellement supérieure ou égale à 1,5 mm, voire égale ou supérieure à 2 mm.

La portion compensatrice 14 pourra ainsi, par sa seule déformation élastique, supporter la majorité, voire la totalité, de l'amplitude du déplacement nécessaire au rattrapage de jeu, même si le jeu atteint des valeurs relativement importantes au fil du temps, typiquement supérieures ou égale à 0,5 mm, à 1 mm, voire de l'ordre de 2 mm.

A titre indicatif, la course axiale utile ΔX (effectivement disponible pour exercer le rattrapage de jeu) pourra être plus globalement comprise entre au moins l'une des valeurs susmentionnées (0,5 mm, 1 mm, 1,5 mm voire 2 mm), et au plus 5 mm, 3 mm, voire 2 mm, afin notamment de conserver la compacité de la rotule 1.

Afin de maintenir en toutes circonstances une compression résiduelle de l'organe de rattrapage de jeu 14, et par conséquent une contrainte de rattrapage de jeu Fₓ d'intensité non nulle et suffisante pour empêcher l'apparition d'un jeu dans la rotule 1, l'amplitude de la déformation initiale de la portion compensatrice 14 (en configuration « reculée » maximale, correspondant à l'assemblage d'origine de la rotule 1 neuve) sera de préférence strictement supérieure à la course axiale utile ΔX prévisible.

L'excédent de déformation de la portion compensatrice 14, qui correspond à l'écart entre le recul initial (conféré par construction pour pré-comprimer la portion compensatrice 14) et la course axiale utile, c'est-à-dire à la « réserve » de déformation minimale de la portion compensatrice 14 qui restera disponible en permanence, quelle que soit la position atteinte par la portion compensatrice le long de la course axiale, pourra être par exemple de l'ordre de 0,5 mm (au moins) à 1 mm, voire 2 mm.

Ainsi, en référence aux valeurs susmentionnées, lors du montage de la culasse 10, et plus particulièrement lors du montage du disque ondulé 20, sur le boîtier 6, après avoir introduit le pivot 2, préalablement coiffé de la cage 11, dans le logement de réception 7, on forcera, en rapportant et en fixant ladite culasse 10 sur ledit boîtier 6, une déformation élastique axiale initiale

(recul initial) de la portion compensatrice 14 qui sera strictement supérieure à 2 mm, et de préférence comprise entre 2,5 mm et 4 mm, et par exemple de l'ordre de 3 mm.

De la sorte, même en configuration « avancée », la cage 11 ayant été déplacée axialement vers l'ouverture d'accès 8, sous la poussée motrice de la portion compensatrice 14, par exemple sur une course axiale ΔX = 2 mm, il subsistera une déformation élastique résiduelle, dans l'exemple 3 mm (recul initial) - 2 mm (course axiale) = 1 mm (déformation élastique résiduelle), qui, compte-tenu de la raideur intrinsèque de la portion compensatrice, permettra le maintien d'une contrainte de rattrapage de jeu Fₓ qui évitera tout relâchement (axial) intempestif de la rotule 1.

Tel que cela est illustré sur la figure 2, le déplacement axial de la cage 11, c'est-à-dire la course utile ΔX correspondant à la résultante axiale de la déformation de la portion compensatrice 14, pourra être majoritairement, voire exclusivement prise en charge par la déformation ΔX₂₃ de l'alternance négative de dégagement 23, et plus particulièrement par le redressement, vers le plan de jauge Pⱼ, de la première moitié, radialement externe, de ladite alternance négative de dégagement 23, qui forme ici une sorte de rampe inclinée qui tend, pour compenser le jeu, à défléchir en direction de la cage 11 à la manière d'un tremplin.

En d'autres termes, on pourra avoir sensiblement ΔX = ΔX₂₃.

De préférence, on pourra fixer la culasse 10 sur le boîtier 6 par sertissage, en rabattant par déformation plastique, par exemple sous presse ou par roulage, le bord 31 du boîtier 6 sur le bord externe de ladite culasse 10, et plus particulièrement sur la couronne périphérique de fixation 21.

Par ailleurs, et quel que soit également l'agencement de la rotule 1 et de l'organe de rattrapage de jeu 14, la raideur axiale de la culasse 10 à l'encontre de la cage 11 est de préférence comprise entre 50 N/mm et 150 N/mm.

Ainsi, le ressort formé par la culasse 10, et plus particulièrement par la portion compensatrice 14 de ladite culasse, permet d'exercer en permanence, sur l'ensemble de la plage utile de rattrapage de jeu, c'est-à-dire quel que soit l'emplacement que la cage 11 occupe dans la plage de positions (axiales) couverte par la course axiale utile ΔX, un effort de rappel Fₓ qui est convenablement dosé, et en particulier suffisant pour maintenir la paroi du palier sphérique 12 au contact de la surface de la sphère d'articulation 4.

La raideur de la culasse 10 pourra avantageusement être déterminée par un choix approprié du nombre des ondulations 22, de l'amplitude et de la période (spatiale, et en l'espèce, radiale) desdites ondulations, ainsi que du matériau constitutif de la culasse 10 et de l'épaisseur dudit matériau.

Selon une variante de réalisation, notamment applicable dans le cas des disques ondulés 20 susmentionnés, la culasse 10 est formée par une rondelle pleine, de préférence à partir d'une tôle dont l'épaisseur e0 est comprise entre 0,5 mm et 3 mm.

On pourra utiliser à cet effet une tôle métallique, par exemple en acier ou en aluminium, ou bien encore en matériau polymère, éventuellement renforcé de fibres (par exemple des fibres de verre).

La mise en forme de ladite tôle, à partir d'une pièce brute plane, pourra être effectuée par frappe à froid (estampage, emboutissage) ou encore par thermoformage.

Avantageusement, l'utilisation d'une culasse 10 de type rondelle pleine, ou « coupelle », simple et robuste, permet notamment de gagner en légèreté et en compacité, tout en assurant à moindre coût une obturation étanche du boîtier 6.

A titre indicatif, le rayon R20 hors-tout du disque ondulé 20, et plus globalement de la culasse 10, pourra être compris entre 15 mm et 30 mm (soit un diamètre hors-tout de 30 mm à 60 mm).

L'épaisseur e0 de la tôle servant à la fabrication de la culasse 10 pourra ainsi être au moins 10 fois, au moins 20 fois, voire au moins 60 fois plus faible que le diamètre hors-tout de ladite culasse 10.

L'épaisseur (axiale) hors-tout E20 du disque ondulé 20 pourra quant à elle être par exemple comprise entre 5 mm et 10 mm, et/ou, ce qui pourra être équivalent, comprise entre 1/8^{e} et 1/5^{e} du diamètre (2*R20) dudit disque ondulé 20, et par exemple de l'ordre de 1/6^{e} dudit diamètre.

Ladite épaisseur E20 hors-tout pourra correspondre à l'amplitude (axiale) de l'ondulation 22, dans le cas d'une ondulation 22 unique (figures 3 à 6), ou à la répartition axiale totale (en gradins) des ondulations 22 dans le cas d'ondulations 22 multiples (figures 7 à 10).

A titre indicatif, l'amplitude (axiale) individuelle de chaque alternance (négative ou positive) 23, 25, 123, 112, 223, 225 pourra ainsi être supérieure ou égale à 1,5 mm, à 2 mm voire à 3 mm, notamment dans le cas d'ondulations 22 multiples, et même supérieure ou égale à 3 mm, à 4 mm, voire à 5 mm, notamment dans le cas d'une ondulation 22 unique.

Bien entendu, l'invention n'est nullement limitée aux seules variantes de réalisation décrites, l'homme du métier étant notamment à même d'isoler ou de combiner librement entre elles l'une ou l'autres des caractéristiques mentionnées dans ce qui précède.

En particulier, l'invention porte sur un disque ondulé 20 en tant que tel, apte à être utilisé simultanément comme obturateur et comme organe de rattrapage de jeu 14 au sein d'une rotule 1.

L'invention porte également sur tout dispositif de direction, notamment de direction assistée, ou tout dispositif de suspension, équipé d'une rotule 1 selon l'invention, ainsi que sur tout véhicule, notamment véhicule automobile, équipé d'un tel dispositif de direction ou de suspension.

L'invention concerne enfin en tant que telle l'utilisation d'une culasse 10, et plus particulièrement d'un disque ondulé 20 (plein), déformable élastiquement, simultanément comme organe de rattrapage de jeu et comme obturateur de boîtier 6, et plus particulièrement sur l'utilisation d'une telle culasse 10, qui sera préalablement déformée élastiquement par construction lors de l'assemblage initial de la rotule 1, de manière à ce que ladite culasse 10 puisse déplacer par la suite, en réduisant progressivement sa déformation pour regagner sa position stable de repos, la cage 11 à l'encontre du pivot 2, au fur et à mesure de l'apparition de jeu dans la rotule, et ce plus particulièrement sur une course axiale utile d'amplitude telle que celle mentionnée plus haut.

## Revendications

1. Rotule (1) comportant d'une part un organe d'articulation mâle (2) dit « pivot », qui comprend une tige (3) portant une sphère d'articulation (4), et d'autre part un organe d'articulation femelle (5), qui comprend un boîtier (6) délimitant un logement de réception (7) qui s'étend, selon un axe directeur (XX'), depuis une ouverture d'accès (8) à travers laquelle le pivot (2) pénètre dans le boîtier (6), jusqu'à une culasse (10), qui obture ledit logement de réception (7) sensiblement à l'opposé de ladite ouverture d'accès (8), ledit logement de réception (7) contenant une cage (11), qui forme un palier sphérique (12) dans lequel s'articule la sphère d'articulation (4), ainsi qu'un organe de rattrapage de jeu (14), qui est soutenu par la culasse (10) et qui est précontraint, par déformation élastique, à l'encontre de la cage (11), de sorte à pouvoir déplacer ladite cage (11) dans le boîtier (6) à l'encontre du pivot (2), afin de compenser l'apparition de jeu dans la liaison entre la sphère d'articulation (4) et le palier sphérique (12), l'organe de rattrapage de jeu (14) étant formé d'un seul tenant avec la culasse (10), dont ledit organe de rattrapage de jeu (14) constitue une portion dite « portion compensatrice » (14), la culasse (10) étant formée par un disque ondulé (20), dont l'axe central (X₁X'₁) coïncide sensiblement avec l'axe directeur (XX') du logement de réception (7), ledit disque ondulé (20) comportant successivement, depuis son bord radialement externe vers son axe central (X₁X'₁), une couronne périphérique de fixation (21), par laquelle ledit disque ondulé (20) est fixé au boîtier (6), puis la portion compensatrice (14), qui est comprise radialement entre la couronne périphérique de fixation (21) et l'axe central (X₁X'₁) dudit disque ondulé, ladite portion compensatrice (14) comprenant au moins une ondulation (22), de sorte à présenter d'une part au moins une alternance négative de dégagement (23), qui prolonge radialement la couronne périphérique de fixation (21) de façon centripète tout en étant orientée axialement à l'opposé de la cage (11) de sorte à former, autour de l'axe central (X₁X'₁), une dépression de dégagement (24) par rapport à ladite cage (11), et d'autre part, au moins une alternance positive (25) porteuse, qui est comprise radialement entre l'alternance négative (23) de dégagement et l'axe central (X₁X'₁) du disque ondulé, en étant orientée axialement vers la cage (11), ladite rotule (1) étant **caractérisée en ce que** l'alternance positive (25) forme, autour de l'axe central (X₁X'₁), une couronne porteuse (26), qui forme axialement saillie par rapport à la dépression de dégagement (24) et qui vient en appui contre la cage (11).

2. Rotule selon la revendication 1 **caractérisée en ce que**, la couronne périphérique de fixation (21) s'étendant sensiblement dans un plan de jauge (Pⱼ) normal à l'axe directeur (XX'), l'alternance négative de dégagement (23) plonge sous ledit plan de jauge (Pⱼ), à l'opposé de la cage (11) par rapport audit plan de jauge (Pⱼ), tandis que l'alternance positive porteuse (25) remonte au-dessus dudit plan de jauge (Pⱼ), du côté de la cage (11).

3. Rotule selon la revendication 1 ou 2 **caractérisée en ce que** la portion compensatrice (14) de la culasse (10) comporte une pluralité d'ondulations (22) sensiblement concentriques, de sorte à présenter radialement, entre la couronne périphérique de fixation (21) et l'axe central (X₁X'₁) du disque ondulé (20), depuis l'alternance négative de dégagement (23) jusqu'à l'alternance positive porteuse (25), une succession de paires d'alternances intermédiaires négatives (123, 223) puis positives (125, 225), de préférence étagées en gradins.

4. Rotule selon l'une des revendications 1 à 3 **caractérisée en ce que** la couronne porteuse (26) de la culasse (10) pénètre dans un lamage (30) de la cage (11).

5. Rotule selon l'une des revendications précédentes **caractérisée en ce que** le disque ondulé (20) présente un dégagement central (27) concave, situé axialement en retrait de la couronne porteuse (26), et agencé de manière à éviter toute interférence entre la culasse (10) et la sphère d'articulation (4) lors des mouvements de rotation de ladite sphère (4) au sein du palier sphérique (12).

6. Rotule selon l'une des revendications précédentes **caractérisée en ce que** la plage de déformation élastique de la portion compensatrice (14) de la culasse (10) est suffisante pour pouvoir, tout en maintenant la cage (11) sous une contrainte de rattrapage de jeu (F_{X}) non nulle, déplacer la cage selon l'axe directeur (XX') sur une course axiale utile (ΔX) qui est supérieure ou égale à 0,5 mm, de préférence supérieure ou égale à 1 mm, préférentiellement supérieure ou égale à 1,5 mm, voire égale ou supérieure à 2 mm.

7. Rotule selon l'une des revendications précédentes **caractérisée en ce que** la raideur axiale de la culasse (10) à l'encontre de la cage (11) est comprise entre 50 N/mm et 150 N/mm.

8. Rotule selon l'une des revendications précédentes **caractérisée en ce que** la culasse (10) est formée par une rondelle pleine, à partir d'une tôle dont l'épaisseur (e0) est comprise entre 0,5 mm et 3 mm.

9. Rotule selon l'une des revendications précédentes **caractérisée en ce que** le logement de réception (7) présente une forme sensiblement tronconique qui va en rétrécissant depuis la culasse (10) vers l'ouverture d'accès (8), et **en ce que** la paroi radialement externe de la cage (11) présente une forme tronconique sensiblement conjuguée, de sorte que le déplacement de ladite cage (11) vers le pivot (2) sous l'action de l'organe de rattrapage de jeu (14) tend à provoquer un resserrement radial du palier sphérique (12) à l'encontre de la sphère d'articulation (4).

## Patentansprüche

1. Kugelgelenk (1), einerseits ein männliches Gelenkorgan (2) umfassend, das "Drehzapfen" genannt wird, das eine Stange (3) umfasst, die eine Gelenkskugel (4) trägt, und andererseits ein weibliches Gelenkorgan (5), das ein Gehäuse (6) umfasst, das einen Aufnahmeraum (7) eingrenzt, der sich entlang einer Leitachse (XX') von einer Zugangsöffnung (8), durch die hindurch der Drehzapfen (2) ins Gehäuse (6) eindringt, bis zu einem Verschlussstück (10) erstreckt, das den besagten Aufnahmeraum (7) in etwa gegenüber der besagten Zugangsöffnung (8) abdeckt, wobei der besagte Aufnahmeraum (7) einen Käfig (11) enthält, der ein kugelförmiges Lager (12) bildet, in dem die Gelenkskugel (4) angeordnet ist, sowie ein Spielausgleichsorgan (14), das vom Verschlussstück (10) getragen wird und durch eine elastische Verformung gegenüber dem Käfig (11) vorgespannt ist, sodass es den besagten Käfig (11) im Gehäuse (6) gegenüber dem Drehzapfen (2) verschieben kann, um das Auftreten eines Spiels in der Verbindung zwischen der Gelenkskugel (4) und dem kugelförmigen Lager (12) auszugleichen, wobei das Spielausgleichsorgan (14) in einem einzigen Stück mit dem Verschlussstück (10) ausgeformt ist, von dem das besagte Spielausgleichsorgan (14) einen Abschnitt bildet, der "Ausgleichsabschnitt" (14) genannt wird, wobei das Verschlussstück (10) durch eine gewellte Scheibe (20) gebildet wird, deren Mittelachse (X₁X'₁) in etwa mit der Leitachse (XX') des Aufnahmeraums (7) zusammenfällt, wobei die besagte gewellte Scheibe (20) nacheinander von ihrem radial externen Rand in Richtung ihrer Mittelachse (X₁X'₁) einen umlaufenden Befestigungskranz (21) umfasst, anhand dessen die besagte gewellte Scheibe (20) am Gehäuse (6) befestigt ist, danach den Ausgleichsabschnitt (14), der radial zwischen dem umlaufenden Befestigungskranz (21) und der Mittelachse (X₁X'₁) der besagten gewellten Scheibe enthalten ist, wobei der besagte Ausgleichsabschnitt (14) zumindest eine Welligkeit (22) umfasst, um einerseits zumindest einen negativen Freiraumwechsel (23) aufzuweisen, der den umlaufenden Befestigungskranz (21) radial in zentripetaler Form fortführt, und dabei axial vom Käfig (11) abgewandt ausgerichtet ist, um um die Mittelachse (X₁X'₁) herum eine Freiraumsenke (24) im Verhältnis zum besagten Käfig (11) zu bilden, und andererseits zumindest einen positiven tragenden Wechsel (25), der radial zwischen dem negativen Freiraumwechsel (23) und der Mittelachse (X₁X'₁) der gewellten Scheibe enthalten ist, und dabei axial dem Käfig zugewandt ausgerichtet ist, wobei das besagte Kugelgelenk (1) **dadurch gekennzeichnet ist, dass** der positive Wechsel (25) um die Mittelachse (X₁X'₁) herum einen Trägerkranz (26) bildet, der axial einen Überstand im Verhältnis zur Freiraumsenke (24) bildet, und sich am Käfig (11) anlegt.

2. Kugelgelenk nach Anspruch 1, **dadurch gekennzeichnet, dass** sich der umlaufende Befestigungskranz (21) in etwa über eine Messebene (Pⱼ) erstreckt, die senkrecht zur Leitachse (XX') verläuft, der negative Freiraumwechsel (23) gegenüber dem Käfig (11) im Verhältnis zur besagten Messebene (Pⱼ) unter die besagte Messebene (Pⱼ) eintaucht, während der positive tragende Wechsel (25) auf Seiten des Käfigs (11) über die besagte Messebene (Pⱼ) ansteigt.

3. Kugelgelenk nach Anspruch 1 oder 2, **dadurch gekennzeichnet, dass** der Ausgleichsabschnitt (14) des Verschlussstücks (10) eine Vielzahl von in etwa konzentrischen Welligkeiten (22) umfasst, um radial zwischen dem umlaufenden Befestigungskranz (21) und der Mittelachse (X₁X'₁) der gewellten Scheibe (20), vom negativen Freiraumwechsel (23) bis zum positiven tragenden Wechsel (25) eine Aufeinanderfolge von negativen (123, 223) und danach positiven (125, 225) Zwischenwechselpaaren aufzuweisen, die vorzugsweise stufenförmig angeordnet sind.

4. Kugelgelenk nach einem der Ansprüche 1 bis 3, **dadurch gekennzeichnet, dass** der Trägerkranz (26) des Verschlussstücks (10) in eine Senkung (30) des Käfigs (11) eindringt.

5. Kugelgelenk nach einem der vorherigen Ansprüche, **dadurch gekennzeichnet, dass** die gewellte Scheibe (20) eine konkave zentrale Ausnehmung (27) aufweist, die sich axial vom Trägerkranz (26) zurückgezogen befindet, und derart angeordnet ist, um bei den Rotationsbewegungen der besagten Kugel (4) innerhalb des kugelförmigen Lagers (12) jedwede Störung zwischen dem Verschlussstück (10) und der Gelenkskugel (4) zu vermeiden.

6. Kugelgelenk nach einem der vorherigen Ansprüche, **dadurch gekennzeichnet, dass** der elastische Verformungsbereich des Ausgleichsabschnitts (14) des Verschlussstücks (10) ausreicht, um den Käfig unter Beibehaltung des Käfigs (11) unter einer Spielausgleichsspannung (Fₓ) ungleich Null auf einem axialen Nutzweg (ΔX) größer oder gleich 0,5 mm und vorzugsweise größer oder gleich 1 mm, vorzugsweise größer oder gleich 1,5 mm, oder gar größer oder gleich 2 mm entlang der Leitachse (XX') zu bewegen.

7. Kugelgelenk nach einem der vorherigen Ansprüche, **dadurch gekennzeichnet, dass** die axiale Steifigkeit des Verschlussstücks (10) gegenüber dem Käfig (11) zwischen 50 N/mm und 150 N/mm liegt.

8. Kugelgelenk nach einem der vorherigen Ansprüche, **dadurch gekennzeichnet, dass** das Verschlussstück (10) durch eine volle Scheibe aus einem Blech gebildet wird, dessen Stärke (e0) zwischen 0,5 mm und 3 mm liegt.

9. Kugelgelenk nach einem der vorherigen Ansprüche, **dadurch gekennzeichnet, dass** der Aufnahmeraum (7) eine in etwa kegelstumpfförmige Form aufweist, die sich vom Verschlussstück (10) zur Zugangsöffnung (8) hin verjüngt, und dadurch, dass die radial äußere Wand des Käfigs (11) eine in etwa angepasste kegelstumpfförmige Form aufweist, sodass die Bewegung des besagten Käfigs (11) zum Drehzapfen (2) unter der Einwirkung des Spielausgleichsorgans (14) dahin tendiert, eine radiale Straffung des kugelförmigen Lagers (12) gegenüber der Gelenkskugel (4) zu bewirken.

## Claims

1. A ball joint (1) including, on the one hand, a male hinge member (2) called « pivot » which comprises a rod (3) carrying a hinge sphere (4) and, on the other hand, a female hinge member (5), which comprises a casing (6) delimiting a receiving housing (7) which extends, along a main axis (XX'), from an access opening (8) through which the pivot (2) penetrates into the casing (6), to a cap (10), which closes said receiving housing (7) substantially opposite to said access opening (8), said receiving housing (7) containing a cage (11), which forms a spherical bearing (12) in which the hinge sphere (4) hinges, as well as a clearance compensation member (14), which is supported by the cap (10) and which is pre-stressed, by elastic deformation, against the cage (11), so as to displace said cage (11) in the casing (6) against the pivot (2), in order to compensate the occurrence of clearance in the connection between the hinge sphere (4) and the spherical bearing (12), the clearance compensation member (14) being formed integrally with the cap (10), whose said clearance compensation member (14) constitutes a portion called « compensation portion » (14), the cap (10) being formed by a corrugated disc (20), whose central axis (X₁X'₁) substantially matches with the main axis (XX') of the receiving housing (7), said corrugated disc (20) including successively, from its radially outer edge to its central axis (X₁X'₁), a fastening peripheral ring (21), by which said corrugated disc (20) is fastened to the casing (6), then the compensation portion (14), which is radially comprised between the fastening peripheral ring (21) and the central axis (X₁X'₁) of said corrugated disc, said compensation portion (14) comprising at least one corrugation (22), so as to have, on the one hand, at least one negative, space-freeing alternation (23), which radially extends the fastening peripheral ring (21) in a centripetal manner while being axially oriented opposite to the cage (11) so as to form, about the central axis (X₁X'₁), a space-freeing depression (24) relative to said cage (11) and, on the other hand, at least one positive carrier alternation (25), which is radially comprised between the negative space-freeing alternation (23) and the central axis (X₁X'₁) of the corrugated disc, while being axially oriented towards the cage (11), said ball joint (1) being **characterized in that** the positive alternation (25) forms, about the central axis (X₁X'₁), a carrier ring (26) which axially forms a projection relative to the space-freeing depression (24) and which abuts against the cage (11).

2. The ball joint according to claim 1 **characterized in that** the fastening peripheral ring (21) substantially extending in a gauge plane (Pⱼ) normal to the main axis (XX'), the negative space-freeing alternation (23) is immersed under said gauge plane (PJ), opposite to the cage (11) relative to said gauge plane (PJ), while the positive carrier alternation (25) rises above said gauge plane (Pⱼ), on the side of the cage (11).

3. The ball joint according to claim 1 or 2 **characterized in that** the compensation portion (14) of the cap (10) includes a plurality of substantially concentric corrugations (22), so as to radially have, between the fastening peripheral ring (21) and the central axis (X₁X'₁) of the corrugated disc (20), from the negative space-freeing alternation (23) to the carrier positive alternation (25), a succession of preferably stepped negative (123, 223) then positive (125, 225) intermediate alternation pairs.

4. The ball joint according to any of claims 1 to 3 **characterized in that** the carrier ring (26) of the cap (10) penetrates into a counter-bore (30) of the cage (11).

5. The ball joint according to any of the preceding claims **characterized in that** the corrugated disc (20) has a concave central recess (27), axially set back relative to the carrier ring (26), and arranged so as to avoid any interference between the cap (10) and the hinge sphere (4) during the rotational movements of said sphere (4) within the spherical bearing (12).

6. The ball joint according to any of the preceding claims **characterized in that** the elastic deformation range of the compensation portion (14) of the cap (10) is sufficient to be able, while maintaining the cage (11) under a non-zero clearance compensation stress (F_{X}), to displace the cage along the main axis (XX') on an effective axial stroke (ΔX) which is greater than or equal to 0.5 mm, preferably greater than or equal to 1 mm, preferably greater or equal to 1.5 mm, or even greater than or equal to 2 mm.

7. The ball joint according to any of the preceding claims **characterized in that** the axial stiffness of the cap (10) against the cage (11) is comprised between 50 N/mm and 150 N/mm.

8. The ball joint according to any of the preceding claims **characterized in that** the cap (10) is formed by a full washer, from a sheet whose thickness (e0) is comprised between 0.5 mm and 3 mm.

9. The ball joint according to any of the preceding claims **characterized in that** the receiving housing (7) has a substantially truncated-cone shape which tapers from the cap (10) to the access opening (8), and **in that** the radially outer wall of the cage (11) has a substantially mating truncated-cone shape, so that the displacement of said cage (11) toward the pivot (2) under the action of the clearance compensation member (14) tends to cause a radial tightening of the spherical bearing (12) against the hinge sphere (4).
